# EUROPEAN PATENT APPLICATION

(11) **EP 4 691 890 A1**
(43) Date of publication of application: **11.02.2026**
(21) Application number: 25188009.2
(22) Date of filing: 08.07.2025
(51) Int. Cl.: B62D 57/02, F16L 55/34

(54) **ROBOTIC MOVEMENT**

(30) Priority: 08.08.2024 GB 202411664
(71) Applicant: Rolls-Royce plc, London N1 9FX (GB)
(72) Inventor: Atia, Mohamed Ghareb Buomy, Derby, DE24 8BJ (GB); Norton, Andrew D, Derby, DE24 8BJ (GB); Sun, Erhui, Derby, DE24 8BJ (GB); Dong, Xin, Derby, DE24 8BJ (GB); Mohammad, Abdelkhalick, Derby, DE24 8BJ (GB); Axinte, Dragos A, Derby, DE24 8BJ (GB)
(74) Representative: Rolls-Royce plc

(57) **Abstract**

A crawler robot (14,20) comprising a proximal end section (22), a distal end section (21) and a central core section (23), through each section passes a central channel; the distal end section (21) comprises a rigid core (21a) surrounding a deformable foot (21b), the proximal end section (22) comprises a rigid core (22a) surrounding a deformable foot (22b), and the central core section (23) comprises a deformable annular body surrounding an extension spring (24), surrounding the annular body is at least one balloon (25), and wherein fluid carrying conduits are connected to the balloon (25) in the central core section, and to the deformable foot (21b, 22b) in the distal end section and the deformable foot in the proximal end section.

## Description

### FIELD

The disclosure relates to a crawler robot that is able to propel itself along an elongate body or propel an elongate body in a controlled way. The disclosure also relates to a method of controlling a crawler robot along a body.

### BACKGROUND

Inspection, cleaning, working in and the repairing of complex systems is inherently difficult; this is due to the inaccessibility of certain components and restrictions in access for necessary tools. Stripping and rebuilding complex components is expensive, time and labour consuming. Therefore, new systems need to be developed that can take the tool to the correct position and/or support the tool at the correct position.

Snake like robotic systems such as borescopes and continuum robots are being developed and improved for inspection and repair systems, but these can be expensive and have issues with controllable insertion into the workspace. Furthermore, their utility is usually limited to the end effector on the robotic arm, as such inspection of the surface of pipes and conduits is difficult. In cleaning a conduit, pipe or tube carrying a fluid may need to be positioned and fixed in the correct place to allow for the high-pressure fluid to be jetted out. Inspection systems such as electrical probes may need to be delivered through a pipe to test the surface of the pipe.

In all these systems, the difficulties arise from the operator having to move the body (the continuum robot, pipe, or robotic sensor) in a controlled way within the confined space so that it can be fixed into the position to allow the body to be able to perform its task.

It is known to have fixturing, such as balloons or arms, positioned onto the robotic bodies. However, these are all fixed in a set position, so the controllability of the fixturing attachment is not optimized, therefore the number of tasks that the robot can perform is limited. In the case of robotic arms featuring a balloon, the controllability of the positioning of the balloon prior to inflation is limited. This means that the body is not in the optimum place to perform the desired task.

It is therefore desirable to develop robotic systems that can move along a body and that are able to lock the body in place at a desired position.

### SUMMARY

In a first aspect there is provided a crawler robot comprising a proximal end section, a distal end section and a central core section, through each of those sections passes a central channel; the distal end section comprises a rigid cover surrounding a deformable foot, the proximal end section comprises a rigid cover surrounding a deformable foot, and the central core section comprises a deformable annular body surrounding an extension spring, surrounding the annular body is at least one balloon, and wherein fluid carrying conduits are connected to the balloon in the central core section, and to the deformable foot in the distal end section and the proximal end section.

The central core section may be surrounded by a fibre reinforcement.

The proximal end section and the distal end section may be made from a resiliently deformable material, for example this may be silicone, or other plastic, rubber or rubber like material.

The central core section may be made from a resiliently deformable material, for example this may be silicone, or other plastic, rubber or rubber like material.

At least one sensor may be connected to the proximal end section and/or the distal end section.

The sensor may be at least one or more of camera systems, touching probes (e.g., eddy current sensors), electrical probes, positional or movement sensors.

The central core section may comprise at least three channels inside.

The crawler robot may have a balloon for expanding the spring and at least a second balloon for fixturing the crawler robot within a workspace.

In a second aspect there is provided a method of operating a crawler robot of the first aspect, the method comprising the steps of: applying a high-pressure fluid to the proximal end section; activating the central core section by applying a high-pressure fluid to the balloon; applying high-pressure fluid to the distal end section; reducing the fluid pressure applied to the proximal end section and the central core section; and reducing the pressure is reduced to the distal end section.

A sensor measurement may be taken prior and/or after at least one of the method steps.

Once the crawler robot and/or crawler robot and body are in position, fluid may be applied to the balloon to inflate it to lock the crawler robot in position with respect to the workspace.

Once the crawler robot is locked in position the body may perform its desired task.

Prior to applying a high-pressure fluid to the proximal end section, the crawler robot and the body may be inserted into a workspace.

The pressure may be reduced to the balloon, proximal end section and distal end section, the body and the crawler robot are removed from the workspace.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**FIG. 1** presents an example of the use of a propelled robot (crawler robot) according to the present disclosure;
**FIG. 2a** presents a cross section of the crawler robot;
**FIG. 2b** presents a schematic of the crawler robot as presented in FIG. 2a;
**FIG. 3** presents a flow chart example of the operation of the crawler robot along the body;
**FIG. 4** presents an alternative embodiment of the crawler robot; and,
**FIG. 5** presents a flow chart of the operation of the crawler robot of the embodiment provided in FIG. 4;

### DETAILED DESCRIPTION

Aspects and embodiments of the present disclosure will now be discussed with reference to the accompanying FIGS. Further aspects and embodiments will be apparent to those skilled in the art.

Complex systems featuring pipes and conduits and confined workspaces feature components that need inspecting, repairing, and cleaning. In order to do this a body, in particular an elongate body, is inserted into the complex system. Typically, this body is flexible, in certain cases the body may be a flexible robotic arm such as a borescope or continuum robot, in other cases the body may be a flexible conduit through which a fluid will be pumped to clean part of the component. With any of these systems it is difficult to firstly get the body into the correct position to perform the task and then to support the body during the operation. Means of insertion of bodies into a workspace is either using a motorized controller or, more typically, by an operator manually inserting it. Due to the flexible nature of the body the accuracy of the insertion is often lower than is desired, this is due to the slack created by the flexible nature of the body. This reduction in accuracy means that it can be difficult to correctly support a tool that forms part of the body, or that is attached to the body for the job it is to do. As such a support system needs to be developed that can hold the body in the correct position to do the task required. This can be through being positioned correctly on the body prior to insertion and using a crawler robot to move the body to the correct position within the workspace. Alternatively, the robot can be placed on the body and can crawl itself into position to hold the body for the task. In certain inspection cases the crawler robot may support sensors that can be moved along the surface of the workspace. Suitable sensors may be at least one or more of camera systems, touching probes (e.g., eddy current sensors), electrical probes, positional or movement sensors.

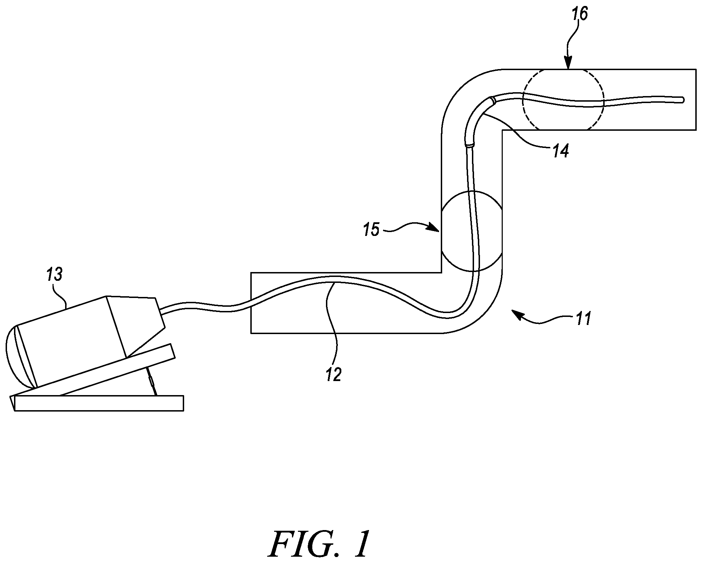

**FIG. 1** presents an example of the use of a propelled robot according to the present disclosure. In FIG. 1 a body 12, which in this case is a continuum robot, is fed into a workspace. In the case of FIG. 1, the workspace 11 is shown having a complex curved shape. The continuum robot 12 is connected to an actuator pack 13; this is able to control the joints of the active section of the continuum robot by adjusting the tensions of tendons that run through the arm of the robot. The continuum arm robot itself comprises an active section, a passive section and an end effector. The passive section comprises a deformable length through which the conduits and tendon cables for the active section and actuator can pass. The crawler robot 14 is positioned around the body, which in this case is a continuum arm robot. In the example the crawler robot is positioned on the passive section of the continuum arm robot. The crawler robot sits around the body and is not fixedly connected to it, so that the crawler robot is able to move along the continuum robot. This means that all the cables, tendons and conduits that are used to control a flexible robotic arm are not affected as they remain within the continuum robot body. The crawler robot comprises an inflatable balloon (fixturing balloon) that allows the body to be fixed in position relative to its surroundings. In FIG. 1 the continuum robot is inserted into the workspace and the crawler robot sits at a first position 15 on the continuum robot. The crawler robot is then moved from the first position to a second position 16 by controlling its movement; this allows the crawler robot to propel itself in an intended direction, to a second position. From this second position the body will be able to perform the desired task. From the second position the crawler robot may then be moved to further locations or may be retracted. Once the task has been performed, the body may be removed from the workspace. The body in this example is presented as a continuum robot, as a form of robotic arm, but it may be a rod, tube, conduit or rail that can be rigid or flexible that is able to be inserted into the workspace so that the crawler robot can move along it. Furthermore, although the example presents the case for the crawler robot being used to assist in fixturing the continuum robot in position it may also be equipped with sensors such as a camera or camera system and can provide a signal of properties of the pipe or conduit through which the crawler robot is moving.

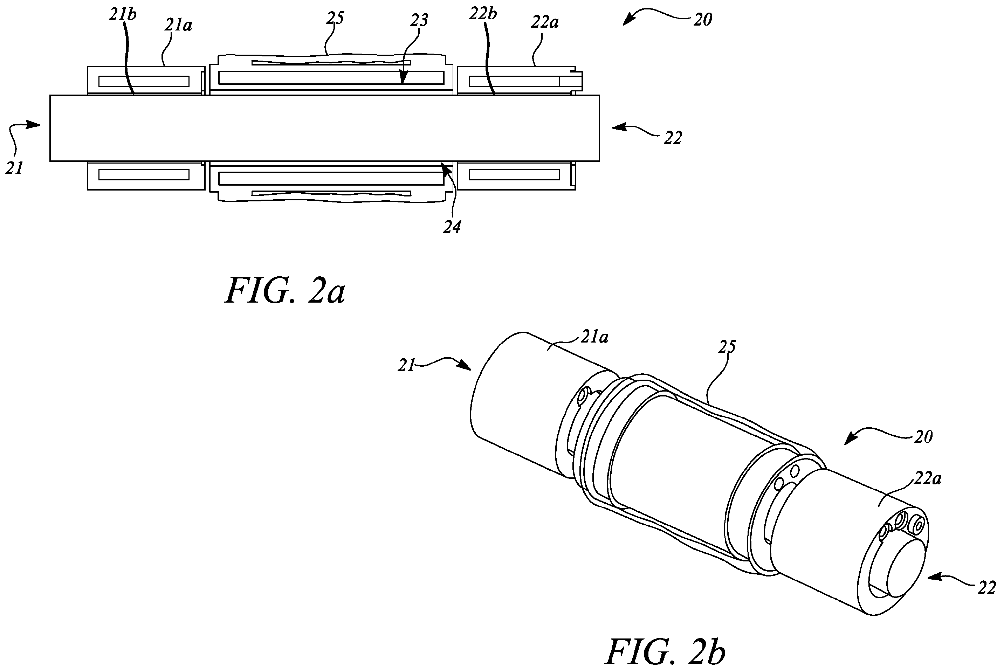

**FIG. 2a** presents a cross section of the crawler robot 20. In FIG. 2a the crawler robot is shown surrounding a section of the body. The crawler robot may be added to the body at any suitable stage; this may be prior or post insertion, depending on the nature of the body that is being inserted. The crawler robot 20 comprises a proximal end section 22, a distal end section 21 and a central core section 23. The distal end section 21 comprises an annular foot 21b that sits in contact with the body, around this annular foot is a cover 21a. The cover may be rigid. The structure of the proximal end section is the same as that of the distal end section, having both a cover 22a and a foot 22b. In the proximal end section 22 and the distal end section 21 the annular foot is made of a resiliently deformable material, for example this may be silicone, or other plastic, rubber or rubber like material. The cover 21a, 22a on each annular foot is used to restrict the deformation of the foot in the radial direction (i.e., radially outwards, towards a perimeter formed by the cover) and to guide the deformation in the opposite radial direction (i.e., radially inwards, towards the centre). This makes the annular feet of the proximal and distal end sections each akin to a clutch for the crawling robot. The proximal and distal end sections are provided with a conduit for supplying high pressure fluid. The central core section 23 comprises an extension spring 24 that sits around the body. The use of an extension spring prevents deformation of the section in the radial direction. An annular body is placed around the spring. The annular body is made from a resiliently deformable material, for example this may be silicone, or other suitable plastic, rubber, or rubber like materials. The annular body may be wrapped in fibres. The fibres may be Kevlar, nylon or cotton wire or any other suitable fibre wire.. The advantage of wrapping the annular body with fibres is that they provide reinforcement for the annular body. The annular body may have channels inside it so that the annular body can be controlled to bend in a specific direction if the corresponding channel is actuated by a tendon running through the channel. This helps the crawler robot navigate turns or curves. The fibres may be configured to guide the robotic arm towards longitudinal motion. A balloon 25 is placed on the surface of the annular body. The balloon may be a tube that sits around the annular body; this reduces issues with sealing of the balloon. Alternatively, the balloon may be a sleeve that is positioned around the annular body; this increases the resilience of the system as it reduces the chance of movement of the balloon about the annular body. In the case of a balloon sleeve, the sleeve is sealed at the end to the annular body to obtain a fluid tight configuration. A single balloon may be used. Alternatively, more than one balloon may be used. The balloons may be identical. In other cases, the balloons may have different expansion sizes so that they can be used to fit in areas having different diameters. A conduit can be passed into the annular body and from there into the balloon. Though not shown in the FIG, at least one sensor may be fitted (connected) to at least one of the proximal end section and/or distal end section.

**FIG. 2b** presents a schematic of the crawler robot 20 as presented in FIG. 2a. FIG. 2b shows how the proximal end section 22, and the distal end section 21 are mounted either side of the central core section 23. The three sections are formed into a crawler robot by physically coupling the three sections together with a through spacing between the sections. The sections may be mechanically coupled through adhesion, a clutch or magnetic coupling. In the case of the FIG. 2b, a single balloon 25 is used, and it is shown that this extends the entire length of the annular body. The proximal end section and distal end section are shown having the same diameter as the central core section when the balloon is not inflated.

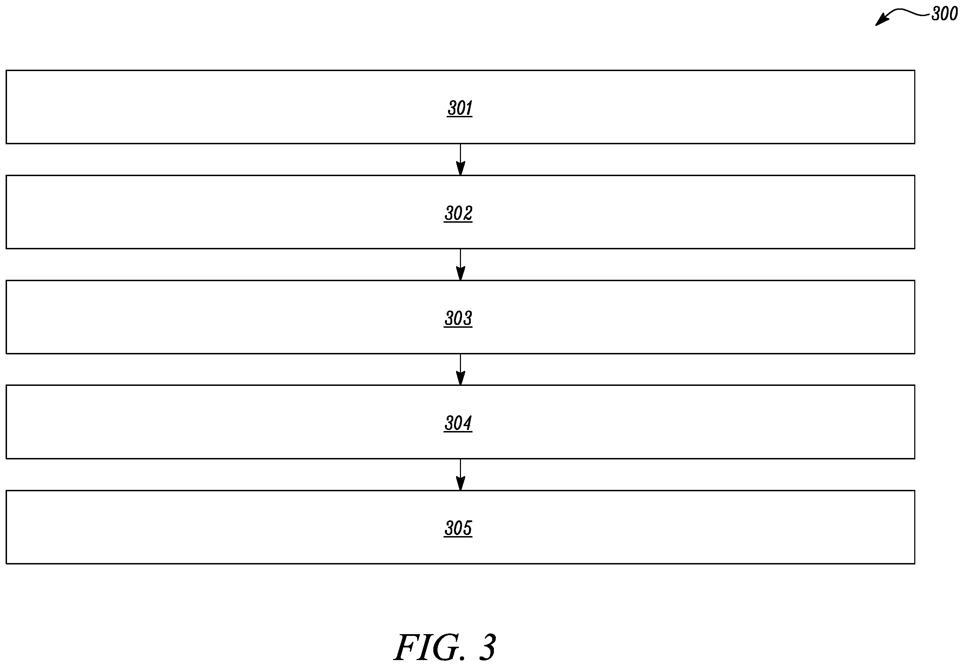

**FIG. 3** presents a flow chart example of the operation of the crawler robot along the body. In the example presented in FIG. 3 the movement section (central core section) is configured to move the crawler robot in a forward direction - that is to say, into the workspace. In this case the proximal end section is considered the back foot, whilst the distal end section is considered to be the front foot. Therefore, if the direction is forwards the motion is considered to be moving away from the access of the robot and the actuator pack that controls it, whilst backwards movement is towards these features. In step 301 a high-pressure fluid is applied to the proximal end section. The high-pressure fluid is applied to the foot of the proximal end section through the conduit that supplies the proximal end section. The application of a high-pressure fluid causes a deformation of the foot of the section due to the deformable nature of the material from which it and the corresponding foot of the distal end section are made. The deformation of the foot of the proximal end section causes the foot to press against the body. The contact force from this is enough to fix the proximal end section of the crawler robot in position relative to the body. In step 302 the central core section is activated by applying a high-pressure fluid to the balloon. The balloon expands along with the central core section including the spring, which forces the distal end section further from the proximal end. In step 303 high-pressure fluid is applied to the foot of the distal end section. The deformation of the foot of the distal end section due to the application of high-pressure fluid allows it to grip the body. In step 304 the fluid pressure to the proximal end section and the central core section is reduced. The reduction in fluid pressure causes the central core section to contract, as a result of the spring force; this in effect pulls the proximal end section towards the distal end section, which in turn moves the crawler robot along the body. In step 305 the pressure is reduced to the foot of the distal end section; this returns the system to a normal state. In order to further progress the continuum robot into the workspace further steps 301 to 305 are repeated. In cases where the crawler robot is working against gravity the control of the pressure applied to the proximal end sections and the distal end sections needs to be controlled so that one is always gripping the body so that the crawler robot is always maintained in position.

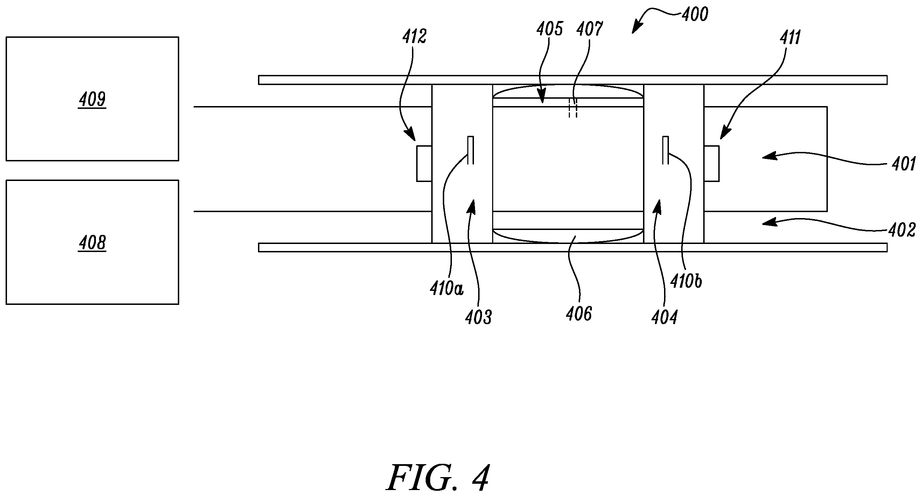

**FIG. 4** presents a further embodiment of the crawler robot 400. In this case the crawler robot is attached to the body 401. By attaching the crawler robot to the body allows the body to be moved into a confined workspace 402 by the crawler robot. This means that the body can be accurately positioned. It also has the advantage of providing a non-electronic means of moving a body with a probe into a hazardous area. The crawler robot can be built into the body or alternatively it can be added after build and attached to the body. The structure comprises a proximal end section 403 comprising an annular body that is connected to the desired body. A proximal end section balloon is connected to the proximal end section and supplied with a conduit to supply a fluid to the balloon. The distal end section 404 is identical to the proximal end section. Between the distal end section and the proximal end section is the central core section 405. The central core section comprises an extension spring - not shown - that sits around the body. The use of an extension spring prevents deformation of the section in the radial direction. An annular body is placed around the spring. The annular body is made from a resiliently deformable material, for example this may be silicone, or other suitable plastic, rubber, or rubber like materials. The annular body may be wrapped in fibres. The fibres may be Kevlar, nylon or cotton wire or any other suitable fibre wire. The advantage of wrapping the annular body with fibres is that they provide reinforcement to the annular body. The annular body may have channels inside it so that the annular body can be controlled to bend in a specific direction if the corresponding channel is actuated by a tendon running through the channel. This can help the crawler robot navigate turns or curves. The fibres may be configured to guide the robotic arm towards longitudinal motion. On the surface of the annular body is placed a balloon 406. The balloon may be a tube that sits around the annular body; this reduces issues with sealing of the balloon. Alternatively, the balloon may be a sleeve that is positioned around the annular body; this increases the resilience of the system as it reduces the chance of movement of the balloon about the annular body. In the case of a balloon sleeve the sleeve is sealed at the end to the annular body to obtain a fluid tight configuration. A single balloon may be used. Alternatively, more than one balloon may be used. The balloons may be identical. In other cases, the balloons may have different expansion sizes so that they can be used to fit in areas having different diameters. Alternatively, it may be configured, so that one balloon is used for the extension of the spring, whilst the other balloon(s) are used to lock the body in position within the workspace. A conduit 407 can be passed into the annular body and from there into the balloon. The balloon and the conduit are connected to a pump 408. A second pump 409 is used to apply high pressure fluid to the proximal end section and distal end section through conduits 410a and 410b. The crawler robot is shown having sensors 411, 412 mounted on a proximal end section and a distal end section.

As discussed above the crawler robot may feature sensors, including cameras. The sensors can be positioned at any suitable point upon the crawler robot body. For example, the body may be connected to the proximal or distal end sections. The robot crawlers may also feature pressure sensors to ensure that the crawler body is correctly gripping the body or the wall of the workspace. FIG. 4 presents an example of a crawler robot featuring sensors. In the example a camera system is placed on the distal end section. Having a camera on the distal end section allows the operator to view the environment that the crawler robot is operating in. A sensor is also placed on the proximal end section. The sensor can be any suitable sensor for example an eddy current probe, a contact resistance probe, a temperature probe. In this case, the crawler robot features a balloon for expanding the spring section and a second balloon for fixturing the crawler robot within the workspace. Such a crawler robot may be connected to the body or may be able to move along the body.

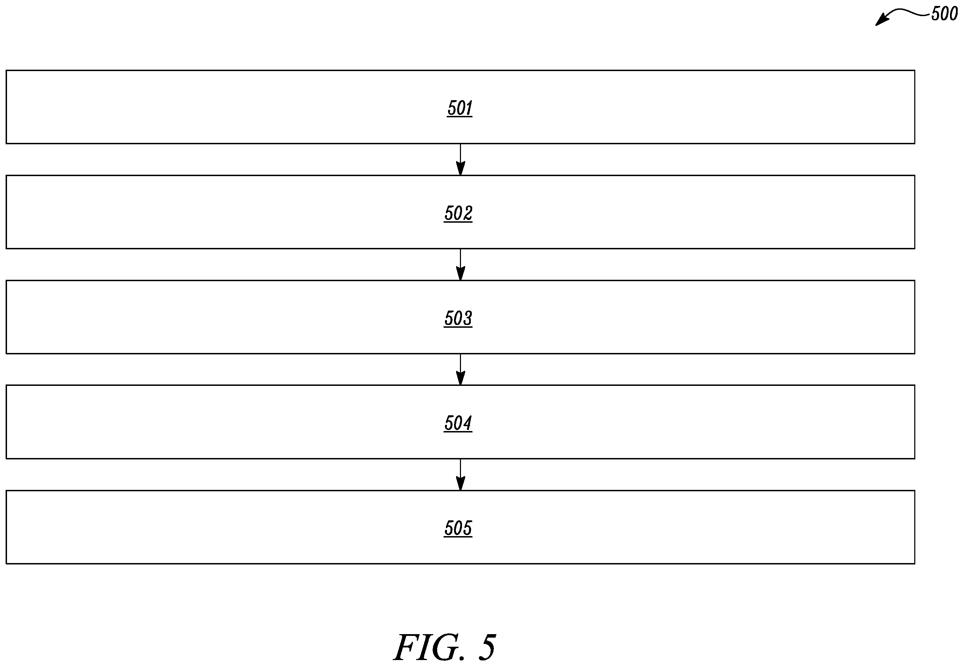

FIG. 5 presents a flow chart of the operation of a crawler robot of the embodiment provided in FIG. 4. In step 501 a high-pressure fluid is applied to the proximal end section. The high-pressure fluid is applied to the proximal end section through the conduit that supplies the proximal end section. The application of a high-pressure fluid causes an expansion of the proximal end section balloon; this allows the proximal end section balloon to grip the wall of the conduit or workspace in which the body is being inserted into. The contact force from this is enough to fix the proximal end section of the crawler robot in position relative to the conduit or workspace. In step 502 the central core section is activated by applying a high-pressure fluid to the balloon. The balloon expands along with the central core section including the spring, which forces the distal end section further from the proximal end. In step 503 high-pressure fluid is applied to the distal end section. The expansion of the balloon of the distal end section due to the application fluid allows it to grip the walls of the workspace. In step 504 the fluid pressure to the proximal end section and the central core section is reduced. The reduction in fluid pressure causes the balloons of the central section and the proximal end section to decrease in volume so that they are no longer contacting the wall of the workspace. When the balloons are not contacting the side walls of the workspace the central core section is able to contract, as a result of the spring force; this in effect pulls the proximal end section towards the distal end section, which in turn moves the crawler robot along the body. In step 505 the pressure is reduced to the distal end section; this returns the system to a normal state. In order to further progress the crawler robot and the body into the workspace steps 501 to 505 are repeated. In cases where the crawler robot is working against gravity the control of the pressure applied to the proximal end sections and the distal end sections needs to be controlled so that one is always gripping the body so that the crawler robot is always maintained in position.

The system may also feature at least one additional balloon or other locking mechanism that is not part of the motion section. These features may be used to hold the continuum robot in position when the desired task of the robot is being carried out. Additionally or alternatively, their operation may be linked to the movement section so that, for example, the at least one additional balloon is inflated during step 305, 505 and deflated during step 301, 501; this will prevent the continuum robot from moving backwards which may be an issue if it is desired for the robot to crawl up a vertical space.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

For example, features of the first embodiment and second embodiment may be combined, such that the proximal end section and distal end section each comprise both a foot radially inboard of a rigid cover, and a radially outboard balloon. Depending upon whether the foot or balloon is activated, the crawler robot may be operated in a first configuration in which it may crawl along a body in a workspace, as per the first embodiment, and in a second configuration, the crawler robot may attach itself to the body (for example, by inflating either the foot of the proximal end section or the foot of the distal end section) to enable the robot to move the body within the workspace as per the second embodiment. The crawler robot may switch between its first configuration and second configuration as required, enabling the crawler robot to both position and support the body (e.g., continuum robot) as required.

## Claims

1. A crawler robot (20, 400) comprising a proximal end section (22, 403), a distal end section (21, 404) and a central core section (23, 405), through each of those sections passes a central channel; the distal end section (21, 404) comprises a rigid core (21a) surrounding a deformable foot (21b), the proximal end section comprises a rigid core surrounding a deformable foot (21b), and the central core section (23, 405) comprises a deformable annular body surrounding an extension spring, surrounding the annular body is at least one balloon (25, 406), wherein fluid carrying conduits are connected to the balloon (25, 406) in the central core section (23, 405), and to the deformable foot (21b) in the distal end section (21, 404) and to the deformable foot (22a) in the proximal end section (22, 403).

2. The crawler robot (20, 400) of claim 1, wherein the central core section (23, 405) is surrounded by a fibre reinforcement.

3. The crawler robot (20, 400) of claim 1 or 2, wherein the proximal end section (22, 403) and the distal end section (21, 404) comprise a resiliently deformable material.

4. The crawler robot (20, 400) of any preceding claim, wherein the central core section (23, 405) is made from a resiliently deformable material.

5. The crawler robot (20, 400) of any preceding claim, wherein at least one sensor is connected to the proximal end section and/or to the distal end section.

6. The crawler robot (20, 400) of claim 5, wherein the sensor is at least one or more of camera systems, touching probes, electrical probes, and positional or movement sensors.

7. The crawler robot (20, 400) of any preceding claim, wherein the central core section comprises at least three channels inside it.

8. The crawler robot (20, 400) of any preceding claim, wherein the crawler robot has a balloon for extending the extension spring and at least a second balloon for fixturing the crawler robot within a workspace.

9. A method (300, 500) of operating a crawler robot of any preceding claim, the method comprising the steps of:
applying a high-pressure fluid to the proximal end section;
activating the central core section by applying a high-pressure fluid to the balloon;
applying high-pressure fluid to the distal end section;
reducing the fluid pressure applied to the proximal end section and the central core section; and
reducing the pressure is reduced to the distal end section.

10. The method (300, 500) of claim 9, further comprising taking a sensor measurement prior and/or after at least one of the method steps.

11. The method of claim 9 or 10, wherein once the crawler robot and/or crawler robot and body are in position, fluid is applied to the balloon to inflate it to lock the crawler robot in position with respect to the workspace.

12. The method of claim 11, wherein once the crawler robot is locked in position the body performs its desired task.

13. The method of any one of claims 9 to 13, wherein prior to applying a high-pressure fluid to the proximal end section, the crawler robot and the body are inserted into a workspace.

14. The method of any one of claims 9 to 13, wherein the pressure is reduced to the balloon, proximal end section and the distal end section, the body and the crawler robot are removed from the workspace.
